(19) Europäisches Patentamt European Patent Office Office européen des brevets

(11) **EP 1 857 928 A1**

(12) **EUROPEAN PATENT APPLICATION**

(43) Date of publication:
**21.11.2007 Bulletin 2007/47**

(51) Int Cl.:
***G06F 9/44*** *(2006.01)*

(21) Application number: **06270050.5**

(22) Date of filing: **17.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Microsoft Corporation Redmond WA 98052 (US)**

(72) Inventor: **Ahs, David Microsoft EPDC 18, Dublin (IE)**

(74) Representative: **Wallis, Helen Frances Mary et al Olswang 90 High Holborn London WC1V 6XX (GB)**

(54) **Resizing controls during localisation**

(57) A system and methods of generating a resized dialogs for use in a new language version of a software product are described. Dialogs comprise many controls and when a software product is translated, some or all of these may need resizing. The resizing is achieved by calculating a display parameter associated with each of the controls and then comparing these required display parameters against data for the same dialog in other languages into which it has already been translated. If the same dialog in one of these other languages has, for each control in the dialog, a display parameter which is not less than the required display parameter in the new language, this other language is selected and the resized dialog for the new language is generated using the control positions and sizes for the selected other language.

FIG. 2

EP 1 857 928 A1

**Description**

BACKGROUND

Software products, such as applications and operating systems, are often provided in many different language versions. The process of converting a software product from the initial language it was written in to other languages is known as 'localisation'. Typically the localisation is done by translating all the string elements within the user interface (UI) of the product and any other language specific parts (e.g. hotkeys, coordinates, sizes) and then re-building the product to produce the language specific version. This localised product then requires extensive testing before it can be shipped to a customer. This is very expensive and results in slow delivery of localised versions of software.

One of the major costs of localisation arises from the need to resize all the controls (such as text areas or boxes, buttons with text etc) on each dialog (e.g. pop-up windows, screens etc) to ensure that no text in the new language is truncated (i.e. part of the text string is not visible because the translated string is longer than the original string) and then to check that none of the new controls overlap. A number of methods have been developed to reduce the time taken by the resizing process.

A first method involves manually copying all sizes for all dialogs and all sizes and positions of all controls within those dialogs from another language that has already been localised and been through the extensive testing process. This process involves little intelligence and has a very small success rate which means that it is still necessary to manually check each dialog for truncations.

A second method involves copying dialog size and control positions and sizes from padded dialogs. In order to be able to copy positions and sizes from a padded dialog (using a method similar to the first method described above), a padded dialog must first be created from a language version which already exists. A padded dialog is created by increasing the size of all the controls and dialogs by a defined amount (e.g. 30%) and then testing each dialog to ensure that there are no overlapping controls. The use of padded dialogs compared to the use of just another localised language version (as in the first method) has the advantage that because all the controls are larger, there is less likelihood that text truncations will occur with a new set of translated strings. However, the padded dialogs and the padded controls within them are often disproportionately larger than the text they contain and this results in a user interface which looks bloated and of poor quality.

A third method uses software to dynamically resize dialogs based on a language independent layout description. Whilst this removes the need to do manual resizing and is reliable (no testing or minimal testing required), it requires creation of the language independent layout description. The effort required to create this is significant and therefore such layout descriptions are only normally created for new or significantly changed dialogs.

The invention seeks to provide an improved method and apparatus for automatically resizing controls.

SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A system and methods of generating a resized dialogs for use in a new language version of a software product are described. Dialogs comprise many controls and when a software product is translated, some or all of these may need resizing. The resizing is achieved by calculating a display parameter associated with each of the controls and then comparing these required display parameters against data for the same dialog in other languages into which it has already been translated. If the same dialog in one of these other languages has, for each control in the dialog, a display parameter which is not less than the required display parameter in the new language, this other language is selected and the resized dialog for the new language is generated using the control positions and sizes for the selected other language.

The present example provides a method of generating a resized dialog for a target language, the dialog comprising a plurality of controls and the method comprising: accessing a store of data relating to the dialog in a target language, the store of data comprising a translated string in the target language associated with each of the plurality of controls; calculating a required display parameter for each of the plurality of controls; accessing a store of data relating to the dialog in a plurality of source languages, the store of data comprising, for each of the plurality of source languages, a stored display parameter for each of the plurality of controls; for each of the plurality of controls, comparing the calculated required display parameter with the corresponding stored display parameters for each of the plurality of source languages to identify any source language where, for all of the plurality of controls, the stored display parameter is not less than the calculated required display parameter; and where one or more source languages are identified, selecting one of the identified source languages based on first predetermined criteria and generating a resized dialog using stored control positions and sizes for the selected source language.

Advantageously, this method provides an efficient and accurate method of resizing a dialog which minimises the resultant errors and therefore minimises the requirements for testing after resizing. If a complete match is found, no testing may be required on the resultant resized dialog. This therefore reduces the amount of user interaction required and provides a lower cost, automated resizing method. The method is independent of the code being run or the target device where the dialog is shown. The only knowledge required is the relationship between the display parameter (e.g. a size of a piece of text in one language) compared with the display parameter (e.g. the size of a piece of text) in another language. This relationship can be calculated without actually displaying the dialog on the target screen or device.

The required display parameter may comprise an extent required for the display of the translated string, the stored display parameter may comprise an extent and the store of data relating to the dialog in a plurality of source languages may comprise, for each of the plurality of source languages, an extent and a control size and position for each of the plurality of controls.

The required display parameter may, alternatively, comprise a control size required in the target language and the stored display parameter may comprise a control size.

The method may further comprise, where no source language is identified: determining a control size required in the target language for each of the plurality of controls; for each of the plurality of controls, comparing the determined control size with the corresponding stored control sizes for each of the plurality of source languages to identify any source language where, for all of the plurality of controls, the stored control size is not less than the determined control size; and where one or more source languages are identified, selecting one of the identified source languages based on second predetermined criteria and generating a resized dialog using the stored control positions and sizes for the selected source language.

The method may further comprise, where no source language is identified in the control size comparison: determining a difference between the stored control size and the determined control size for each of the plurality of source languages and for each of the plurality of controls; selecting one of the source languages based on the determined differences; and generating a resized dialog using the stored control positions and sizes for the selected source language.

Advantageously, this method minimises the number of resultant errors when it is not possible to eliminate the possibility of any errors in the resized dialog.

The method may further comprise, where no source language is identified in the control size comparison: accessing a store of data relating to one or more corresponding padded dialogs, the store of data comprising, for each of the one or more corresponding padded dialogs, a control size and position for each of the plurality of controls in the dialog; for each of the plurality of controls, comparing the determined control size with the corresponding stored control sizes for each of the one or more corresponding padded dialogs to identify any padded dialog where, for all of the plurality of controls, the stored control size is not less than the determined control size; and where one or more corresponding padded dialogs are identified, selecting one of the corresponding padded dialogs based on predetermined criteria and generating a resized dialog using the stored control positions and sizes for the selected corresponding padded dialog.

Advantageously, by using padded dialogs, the possibility that there will be truncations in the text is further reduced. This may be particularly important where the method is executed at run time.

The method may further comprise, where no corresponding padded dialog is identified: determining a difference between the stored control size and the determined control size for each of the plurality of source languages, for each of the corresponding padded dialogs and for each of the plurality of controls; selecting one of the source languages or one of the corresponding padded dialogs based on the determined differences; and generating a resized dialog using the stored control positions and sizes for the selected source language or corresponding padded dialog.

Preferably, determining a control size required in the target language for each of the plurality of controls comprises: for a first of the plurality of controls, comparing the calculated extent required with the corresponding stored extents for each corresponding control in the plurality of source languages to identify any corresponding control where the stored extent is not less than the calculated extent required; where one or more corresponding controls are identified, selecting the corresponding control from the identified corresponding controls with the smallest stored control size and setting the control size required in the target language for the first of the plurality of controls equal to the stored control size of the selected corresponding control; and repeating the comparing, selecting and setting steps for each of the plurality of controls.

The first predetermined criteria and the second predetermined criteria may be the same.

The dialog may comprise a plurality of sub-dialogs.

Advantageously, this enables dialogs which are viewed at the same time (referred to as 'sub-dialogs') to all be resized using the same source language. This minimises the likelihood of errors.

The store of data relating to the dialog in a target language may comprise one or more translated strings in a target language associated with each of the plurality of controls; and wherein calculating an extent required for display of the translated string for each of the plurality of controls may comprise: for each of the plurality of controls, calculating an extent for display of each of the one or more translated strings associated with the control and setting the extent required for the control equal to the largest of the calculated extents.

Advantageously, the method is able to resize controls with dynamic UI.

The store of data relating to the dialog in a plurality of source languages further may comprise a dialog size for each of the plurality of source languages and generating a resized dialog using the stored control sizes for the selected source language may comprise: generating a resized dialog using the stored control positions and sizes and the stored dialog size for the selected source language.

The method may further comprise: calculating a confidence factor associated with the generated resized dialog.

A second example provides a computer program comprising computer program code means adapted to perform all the steps of any of the methods described herein when said program is run on a computer.

The computer program may be embodied on a computer readable medium.

A third example provides a method of generating a resized group of dialogs for a target language, each dialog comprising a plurality of controls, and the method comprising: for each dialog in the group of dialogs, generating a resized dialog according to any of the methods described above, wherein the first predetermined criteria ensure that the same source language is selected for each dialog in the group of dialogs.

A fourth example provides a system for generating a resized dialog for a target language, the dialog comprising a plurality of controls and the system comprising: a processor; and a memory arranged to cause the processor to: access a store of data relating to the dialog in a target language, the store of data comprising a translated string in the target language associated with each of the plurality of controls; calculate a required display parameter for each of the plurality of controls; access a store of data relating to the dialog in a plurality of source languages, the store of data comprising, for each of the plurality of source languages, a stored display parameter for each of the plurality of controls; for each of the plurality of controls, compare the calculated required display parameter with the corresponding stored display parameters for each of the plurality of source languages to identify any source language where, for all of the plurality of controls, the stored display parameter is not less than the calculated required display parameter; and where one or more source languages are identified, select one of the identified source languages based on first predetermined criteria and generate a resized dialog using stored control positions and sizes for the selected source language.

The required display parameter may comprise an extent required for the display of the translated string, the stored display parameter may comprise an extent and the store of data relating to the dialog in a plurality of source languages may comprise, for each of the plurality of source languages, an extent and a control position and size for each of the plurality of controls.

The required display parameter may, alternatively, comprise a control size required in the target language and the stored display parameter may comprise a control size.

The memory may be further arranged to cause the processor to, where no source language is identified: determine a control size required in the target language for each of the plurality of controls; for each of the plurality of controls, compare the determined control size with the corresponding stored control sizes for each of the plurality of source languages to identify any source language where, for all of the plurality of controls, the stored control size is not less than the determined control size; and where one or more source languages are identified, select one of the identified source languages based on second predetermined criteria and generate a resized dialog using the stored control positions and sizes for the selected source language.

The memory may be further arranged to cause the processor to, where no source language is identified in the control size comparison: determine a difference between the stored control size and the determined control size for each of the plurality of source languages and for each of the plurality of controls; select one of the source languages based on the determined differences; and generate a resized dialog using the stored control positions and sizes for the selected source language.

The memory may be further arranged to cause the processor to, where no source language is identified in the control size comparison: access a store of data relating to one or more corresponding padded dialogs, the store of data comprising, for each of the one or more corresponding padded dialogs, a control position and size for each of the plurality of controls in the dialog; for each of the plurality of controls, compare the determined control size with the corresponding stored control sizes for each of the one or more corresponding padded dialogs to identify any padded dialog where, for all of the plurality of controls, the stored control size is not less than the determined control size; and where one or more corresponding padded dialogs are identified, select one of the corresponding padded dialogs based on predetermined criteria and generate a resized dialog using the stored control positions and sizes for the selected corresponding padded dialog.

The memory may be further arranged to cause the processor to, where no corresponding padded dialog is identified: determine a difference between the stored control size and the determined control size for each of the plurality of source languages, for each of the corresponding padded dialogs and for each of the plurality of controls; select one of the source languages or one of the corresponding padded dialogs based on the determined differences; and generate a resized dialog using the stored control positions and sizes for the selected source language or corresponding padded dialog.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

## DESCRIPTION OF THE DRAWINGS

The present description will be better understood from the following detailed description read in light of the accompanying drawings, wherein:

FIG. 1 is a schematic diagram of an example dialog;
FIG. 2 is an example flow diagram of a first stage of a method of resizing controls within a dialog;
FIG. 3 is an example flow diagram of a second stage of a method of resizing controls within a dialog;
FIG. 4 is an example flow diagram of a method of calculating a required control size;
FIG. 5 shows an example flow diagram of the process of comparing the extent required by a translated string against stored values for a multi-line control;
FIG. 6 is a second example flow diagram of a second stage of a method of resizing controls within a dialog;
FIG. 7 shows an example flow diagram of a method of creating special padded dialogs; and
FIG. 8 is a schematic diagram of a system for performing the methods of resizing controls within a dialog.

Like reference numerals are used to designate like parts in the accompanying drawings.

## DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

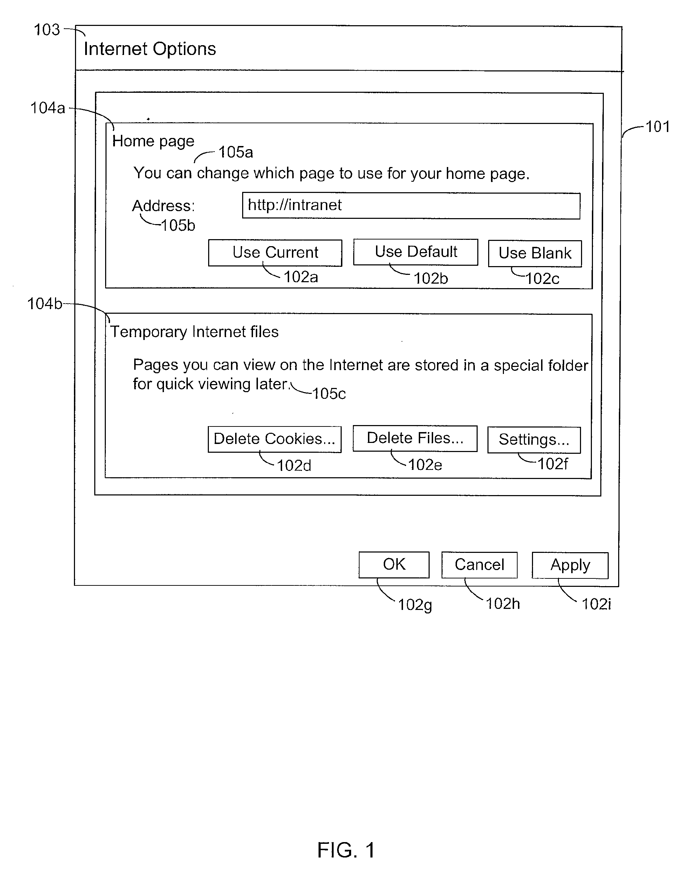

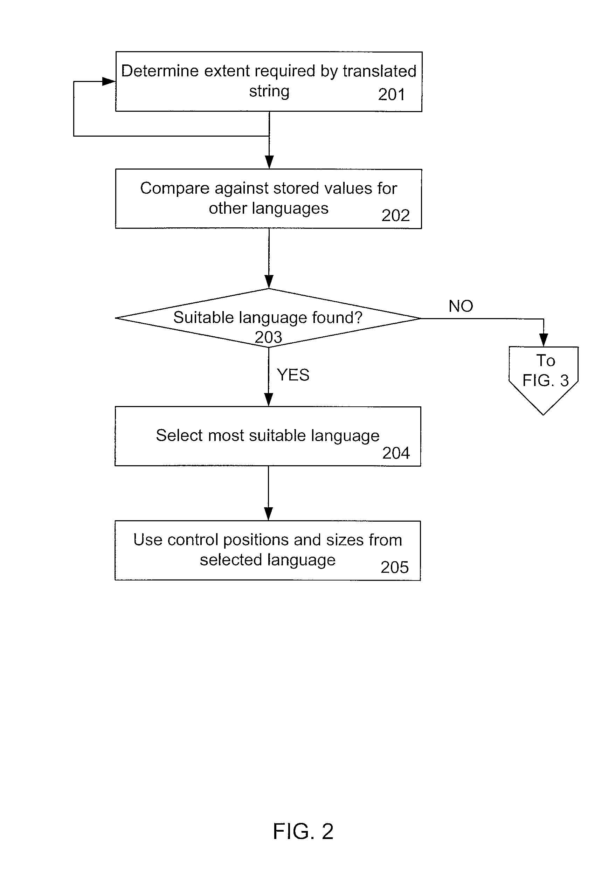

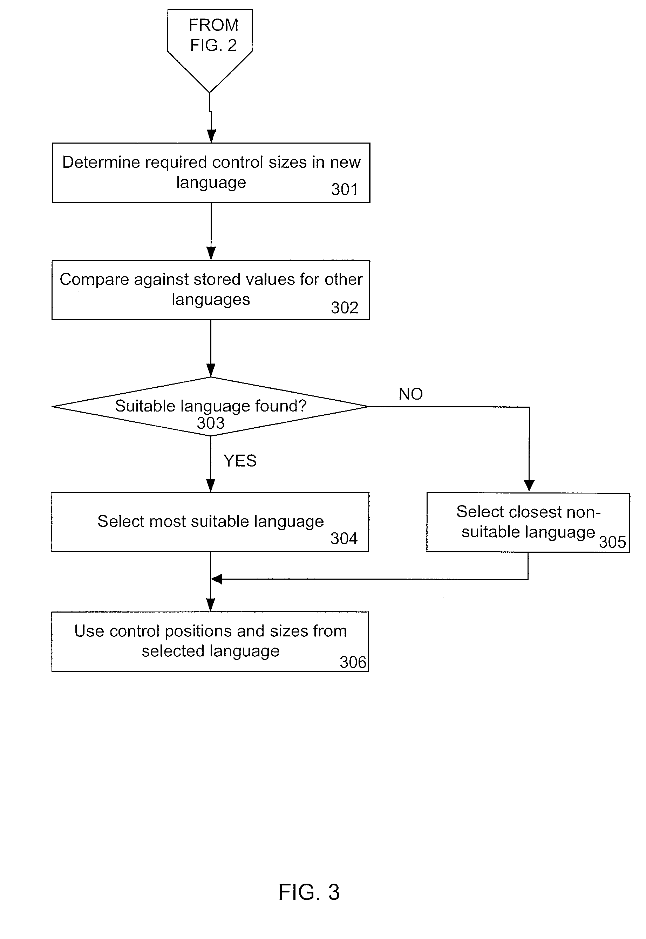

A method of resizing controls which may be used for localisation can be described with reference to an example dialog within an application as shown in FIG. 1. FIG. 1 shows a dialog 101 which contains many controls including buttons with text on them 102a-102i, a title bar containing text 103, sub-title fields 104a, 104b and other text strings 105a-105c. FIG. 2 is an example flow diagram of a first stage of a method of resizing controls within a dialog during localisation. The language into which the dialog is being translated is referred to herein as the 'target language'. For each control within the dialog (e.g. for each of controls 102a-102i, 103, 104a, 104b and 105a-105c) the extent required for the text of the translated string in the target language is calculated (step 201). The term 'extent' is used herein to refer to the display area occupied by the string in the particular language, for example 10x60 pixels. The extent may be specified in any units and as in many cases the height will remain constant (e.g. 10 pixels), the extent may be specified by the length alone (e.g. 60 pixels). The extent will depend upon many factors including, but not limited to, the particular string, the font and the script (e.g. italic, bold etc).

Many software products involve use of dynamic user interfaces (UIs) such that the exact appearance of a dialog depends upon the exact sequence of steps prior to the display of the dialog. In a dynamic UI, there may be a number of different strings which may appear on a particular control dependent upon the sequence of steps leading up to the display of the dialog. In such a situation, the string with the greatest extent is used in resizing the controls and it is this greatest extent which is determined in step 201 and used in subsequent method steps.

The required extent values for each control (determined in step 201) are compared against stored values for the same dialog in other languages, (referred to herein as 'source languages') which have already been resized and tested to identify a source language in which the extent of text for all the controls in the particular dialog is not less than the required extent for the language being resized (step 202). In a first example, the following comparison may occur:

|  | Target language | Source language 1 | | Source language 2 | |
|---|---|---|---|---|---|
|  | Extent | Extent | Control size | Extent | Control size |
| String 1 | 10 | 9 | 9 | 13 | 8 |
| String 2 | 12 | 15 | 10 | 3 | 10 |

In this example, neither of the source languages used for comparison are suitable. Source language 1 is not suitable because although the extent for string 2 is larger than that required in the target language, the extent for string 1 is smaller (extent=9, required extent=10). Source language 2 is not suitable because although it has a greater extent for string 1, the extent for string 2 (extent=3) is less than the required extent (extent=12) in the target language. In such a situation, where no suitable source language is found (determined in step 203), then the first stage has not been successful and the second stage may then be used to complete the resizing process, as described below.

If however, a suitable source language is found (in step 203), as shown in the example below, the most suitable source language is selected (step 204). The most suitable source language is the suitable source language where the overall difference between the required extents for the target language and the actual extents in the source language is smallest. The overall difference may be calculated in many different ways, e.g. sum of differences, sum of squares of differences, largest difference on any control etc or any suitable algorithm. For example, two suitable source languages may be identified:

|  | Target language | Source language 3 | | Source language 4 | |
|---|---|---|---|---|---|
|  | Extent | Extent | Control size | Extent | Control size |
| String 1 | 10 | 11 | 10 | 13 | 8 |
| String 2 | 12 | 15 | 10 | 20 | 15 |

In this example, (using any of the three example calculation methods mentioned above), source language 3 is more suitable than source language 4 and therefore source language 3 is selected (in step 204).

Having selected the most suitable source language (in step 204), the control positions and sizes from that selected language are then used for the dialog in the target language (step 205). Consequently, in the example given above, the control positions and sizes from the dialog in source language 3 would be used to generate the dialog for display (if the process is being used at run-time) or stored for later use in generating the dialog for display (if the process is being used before run-time, e.g. at compile time). This process may then be repeated for each dialog within a software product and different source languages may be identified as suitable (in step 203) for different dialogs within the product.

As mentioned above, if a suitable source language is not identified (in step 203), another stage of the method may be used, as can be described with reference to FIG. 3 which shows an example flow diagram of a second stage of a method of resizing controls within a dialog during localisation. In the second stage, the required control sizes in the target language are calculated (step 301). These may be calculated by comparison with the source languages by checking each corresponding control to find a control that has the same or a greater extent than required in the target language, and where such a control is found, storing the corresponding control size as the minimum control size needed. Where multiple source languages have an equal or greater extent than required in the target language, the smallest corresponding control size is stored. For example, using the first example given above, the following comparison may occur:

|  | Target language | Source language 1 | | Source language 2 | |
|---|---|---|---|---|---|
|  | Extent | Extent | Control size | Extent | Control size |
| String 1 | 10 | 9 | 9 | 13 | 8 |
| String 2 | 12 | 15 | 10 | 3 | 10 |

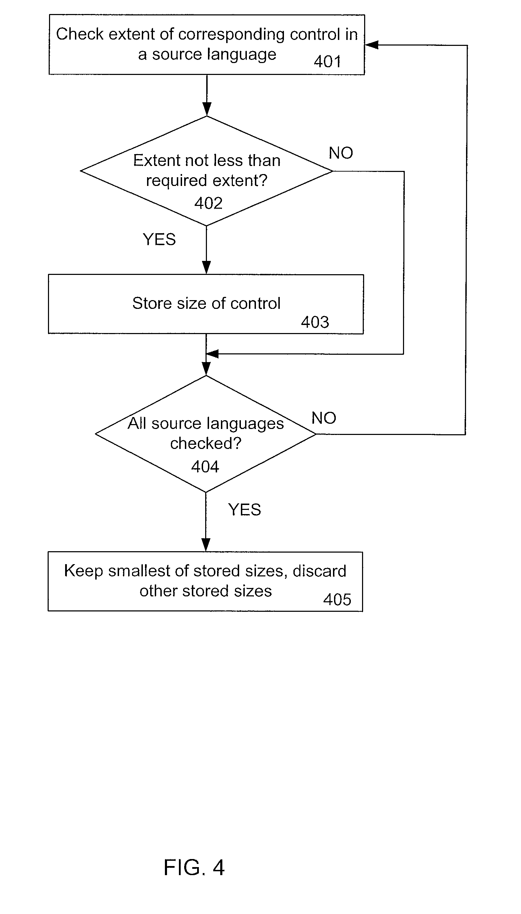

For string 1, source language 2 has a greater extent and therefore the corresponding control size of 8 is stored as the minimum control size for string 1. For string 2, source language 1 has a greater extent and therefore the corresponding control size of 10 is stored as the minimum control size for string 2. An example flow diagram showing this method of determining required control size (step 301) is shown in FIG. 4. The extent of a corresponding control in a source language is checked (step 401) and it is determined whether the extent is not less than the required extent (step 402). If the extent is not less than the required extent (YES in step 402) then the size of the corresponding control is stored (step 403). This process is then repeated for each source language (steps 401-404) and having checked all source languages (YES in step 404), the smallest of all the stored sizes is kept and the remaining stored sizes are discarded (step 405).

In another embodiment, the required control sizes may be determined (in step 301) by calculating them based on one or more parameters relating to the string and / or the control. Examples of parameters include the length of the string, the font used, the script used, the type of control, the border required around the string etc.

The stored minimum control sizes for each control in the dialog (determined in step 301) are then compared against the control sizes for the source languages to identify a source language where the size of each control is not less than the stored minimum sizes for the target language (step 302). Using the example shown above, both source language 1 and source language 2 are suitable languages because in both cases the control sizes for each control are equal to or greater than the stored minimum sizes.

If one or more suitable languages are found (step 303), then the most suitable language is selected (step 304). In an analogous manner to FIG. 2 step 204, the most suitable language is selected to be the one where the overall difference between the stored minimum control sizes for the target language and the control sizes in the source language is smallest. The overall difference may be calculated in many different ways, e.g. sum of differences, sum of squares of differences, largest difference on any control etc or any suitable algorithm. In the example given above, source language 2 will be selected as the most suitable language as the control sizes in source language 2 are equal to the stored minimum control sizes in the target language.

If however, no suitable languages are found (step 303), then the closest non-suitable language is selected (step 305). The closest non-suitable language may be selected to be the one where the overall difference between the stored minimum control sizes for the target language and the control sizes in the source language is smallest. The overall difference may be calculated in many different ways, e.g. sum of differences, sum of squares of differences, largest difference on any control etc or any suitable algorithm. Although the selection step may appear analogous to the selection of the most suitable language (step 304), in some embodiments the method by which the overall difference is calculated may be different. For example, in determining the closest non-suitable language only those controls which are too small (i.e. control size in source language < minimum stored control size for target language) may be considered. Furthermore it may be important that no control is significantly too small and therefore either sum of squares of differences or largest negative difference on any control may be used to calculate the overall difference. In an example, the overall difference may be calculated such that the smallest number of errors are likely to occur in the dialog.

Having selected a source language (in step 304 or 305), the control positions and sizes from that selected source language are used for the dialog in the target language. Consequently, in the example given above, the control positions and sizes from the dialog in source language 2 would be used. The process (stage 1 as shown in FIG. 1 and if required, stage 2 as shown in FIG. 2) may then be repeated for each dialog within a software product and different source languages may be identified as suitable (in step 203, 304 or 305) for different dialogs within the product. Where the closest non-suitable language is selected (in step 305) and used (in step 306), errors may occur (e.g. truncation of text) and therefore the dialog will require review / testing.

In the examples above, the extent is specified as a single dimension, the string length, because the other dimension (the string height) remains constant during resizing. However, as described above, two-dimensional calculations may be performed instead using the same logic as described above. In such a two-dimensional example, the following comparison may occur:

| | Target language | Source language 5 | | Source language 6 | |
|---|---|---|---|---|---|
| | Extent | Extent | Control size | Extent | Control size |
| String 1 | 10, 9 | 9, 9 | 9, 11 | 13, 9 | 8, 11 |
| String 2 | 12, 9 | 15, 9 | 10, 11 | 13, 9 | 10, 11 |

In this example, source language 5 is not suitable but source language 6 is suitable, so the control sizes for language 6 would be used.

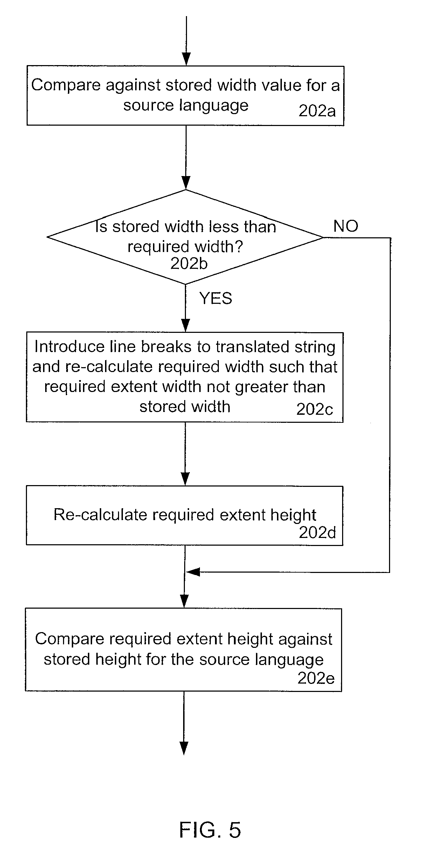

Some controls may be multi-line controls, in that they contain two or more rows of text. In these cases the extent is calculated in both dimensions, potentially adding in line-breaks in the target string to accomplish the string being wrapped in the right place. This can be described with reference to FIG. 5 which shows an example flow diagram of the process of comparing the extent required by a translated string against stored values for a multi-line control (step 202, FIG. 2). As shown in FIG. 2, the two-dimensional extent required by the translated string, as a single line, is first determined (step 201, FIG. 2) i.e. the width and height used. The required width extent is then compared against a stored width value for a source language (step 202a) and if the width extent of the translated string is greater than the width extent of the string in the source language (step 202b), one or more line-breaks are introduced into the translated string (between words), if possible, so that the width extent of the translated string is less than or equal to the stored width extent of the string in the source language (step 202c). Once the width extent of the translated string is less than or equal to the stored width extent in the source language, the required height extent of the translated string is re-calculated (step 202d) and this new required height is compared against the stored height for the particular source language (step 202e). The process (steps 202a-e) is then repeated for each source language and for each control within the dialog. In each iteration, the line breaks may be inserted in different places based on the width of the source language being compared against. The subsequent logic for determining if suitable languages are found and selecting a suitable language is the same as described above (steps 203 onwards). However, in addition to using the control positions and sizes of the selected language, the line breaks inserted for the selected language in step 202c may also be inserted into the translated string. Some controls will wrap the text automatically when displayed so there may not be a need to include the line-breaks. The introduced line-breaks in that case are used to simulate how the control will wrap the text when displayed. The process shown in FIG. 5 and described above may be optimized by checking against stored values before/after each line-break is introduced.

In practice, the first stage of control resizing is likely to identify a suitable language in a large proportion of cases although it is dependent upon the number of source languages (e.g. 50-60% of cases where there are approximately 20 source languages). The first stage will be more successful where the target language has a smaller extent than one or more of the source languages and also where the variation in extent within a language is small. The second stage of control resizing is likely to identify a suitable language in most of the remaining cases (where there is a reasonable number of source languages) and is able to accommodate situations where short strings are located within large controls (as for string 2 in source language 2 in the example given above, or where the short string 'OK' is located inside a large button).

Although the above description refers to resizing of controls, in many circumstances it will be necessary for the size of the dialog to be changed in addition to the size and position of one or more of the controls within the dialog, for example when the controls increase such that they may be too large for the dialog. In such a situation, in addition to using the control positions and sizes from the selected language / dialog (in steps 205, 306 and 605), the dialog size from the selected language / dialog is also used.

Having resized the controls within one or more dialogs, the methods described above may report a confidence factor associated with the resizing of each dialog (e.g. after step 205 of FIG. 2 and step 306 of FIG. 3). This confidence factor may provide an indication of the probability of there being errors in the resized dialog in the target language. Where the controls are resized based on a selected suitable language (selected in step 204 or 304), the resized dialog should not have any errors unless errors remained in the tested selected source language. However, where controls are resized using a selected non-suitable language (selected in step 305), errors may occur. The number of errors is likely to depend on the degree of non-suitability of the source language selected.

In an example, the overall difference may be used as the confidence factor, with a confidence level of 1 or more indicating that errors are unlikely to occur and a confidence level less than one indicating that errors are likely to exist within the target language dialog. As described above, different algorithms may be used to calculate the overall difference depending on whether it is calculated in step 204, 304 or 305. For example the following set of algorithms may be used:

$$\text{For step 204:} \quad D = 1 + \sum \left( \frac{X_s - X_t}{X_s} \right)^2$$

where: $D$ = Overall difference

$X_s$ = Extent in source language
$X_t$ = Extent in target language

$$\text{For step 304:} \quad D = 1 + \sum \left( \frac{C_s - C_t}{C_s} \right)^2$$

For step 305: $D = 1 - \sum \left( \dfrac{C_s - C_t}{C_s} \right)^2$

where: $D$ = Overall difference

$C_s$ = Control size in source language
$C_t$ = Control size in target language

In another example, the following algorithm may be used to calculate the confidence factor based either on extent only or size and extent:

If N=0: (C+(1−T/(T+D)))/C

If N>0: (C−N+T/(T+D))/C

Where, if basing the confidence factor on extent only:

T = the total extent for all controls for the target language
D = the total difference between the extent for each control on the target and source language)
N = the total number of controls where the extent of the source language is less than the extent of the target language
C = the total number of controls in the target language

Or, if basing the confidence factor on size and extent:

T = the total size for all controls for the target language plus the total extent for all controls for the target language
D = the total difference between the sizes for each control on the target and source language plus the total difference between extent for each control on the target and source language
N = the total number of controls where the size is not enough plus the total number of controls where the extent is not enough
C = double the number of controls in the target language

The above algorithm takes into account both the amount of difference between extent/size and the number of controls that don't match.

As described above, the algorithms used may be selected based on preferences. However, preferably the same set of algorithms is used for all of the dialogs within a software product. In this example, the same algorithms are used to select the most suitable language and also to calculate the confidence factor. In other examples, different algorithms or criteria may be used to determine the confidence factor. The confidence factor may be reported for each dialog and / or an overall confidence factor for the whole software product may be reported.

In both method stages shown above, comparisons are performed against stored values relating to source languages. These stored values (e.g. extent of text and size of control) may be stored in a database (e.g. an XML database) along with further information about each dialog, such as the position of each control on the dialog and the size of the dialog. The database may be created by allowing a parser (a tool that can understand a dialog in a specific format) to expose the values and then these values may be saved into the xml database. This may be done statically on the sources (either compiled or not) taken from a localisation database. By using a parser system, any dialog for which a parser can expose the required values can be resized. Information describing which dialogs should be resized together, what dynamic strings exists may be manually added to the XML data as well or may be automatically extracted from the software product and added to the database.

The source languages used in the comparison process (steps 202 and 302) may include not only languages which are written in the same orientation (e.g. left to right or right to left) as the target language, but also languages written in different orientations. Where a language with a different orientation is selected as the most suitable language (in step 204, 304 or 305), the dialog layouts are transposed (e.g. flipped where a left to right source language layout is to be used for a dialog in a right to left target language).

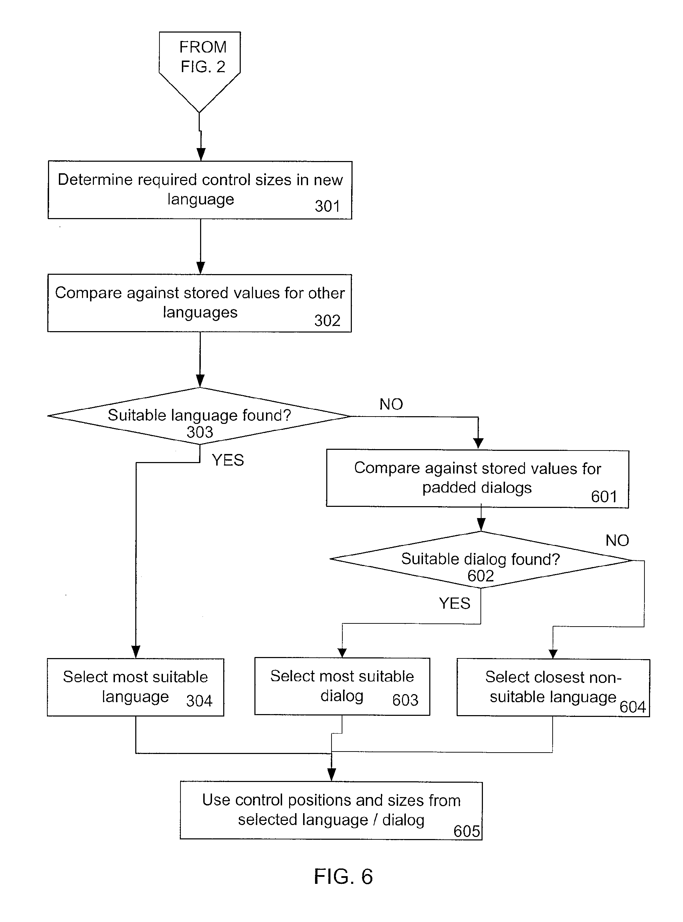

The source languages may also include padded versions of dialogs in an existing language, again where the padded dialog has already been created and tested. As described above, a padded dialog is created by increasing the size of all the controls and the dialog itself by a defined amount (e.g. 30%). The padded versions of dialogs may, in an embodiment, be used only if no non-padded suitable language is identified, for example, as shown in FIG. 6 which shows a second example flow diagram of the second stage of a method of resizing controls. As described above, the required control sizes in the target language are calculated (step 301) and then compared against the control sizes for the source languages to identify a source language where the size of each control is the not less than the stored minimum sizes for the target language (step 302). If one or more suitable languages are found (step 303), then the most suitable language is selected (step 304) and the control positions and sizes from this selected source language are used for the target language (step 605). If however, no suitable language is found (step 303), the required control sizes in the target language are compared against stored values for padded dialogs (step 601). These padded dialogs may be based on one or more other source language versions. The comparison process may be performed using methods analogous to those described in relation to steps 202 and 302. If one or more suitable padded dialogs are found (step 602), the most suitable padded dialog is selected (step 603) in an analogous manner to the selection steps 204 and 304, and the control positions and sizes from this selected padded dialog are then used for the target language (step 605). If no suitable padded dialog is found, the closest non-suitable language is identified from the source languages (step 604). This comparison process is performed in an analogous manner to step 305 and may compare the target language values to only the non-padded languages or in another embodiment the comparison may include all the source languages whether padded or not. The control positions and sizes from the selected closest non-suitable language are then used for the target language (step 605).

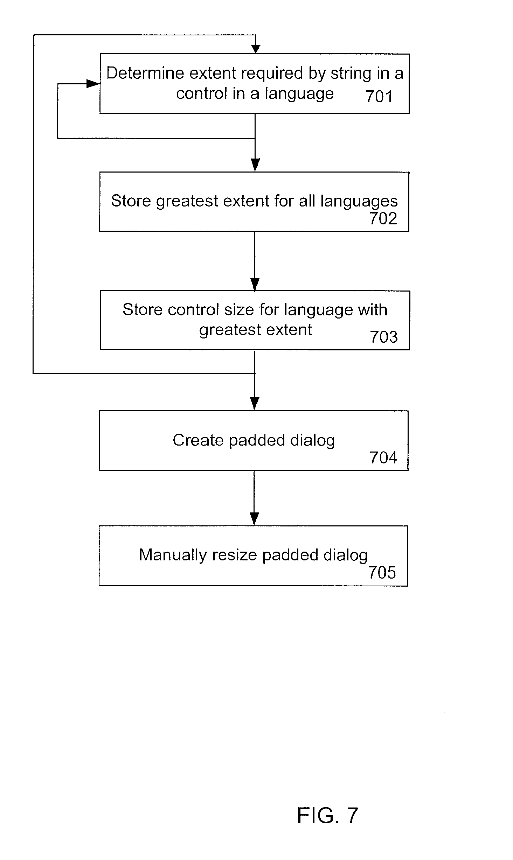

The source languages may also include special padded dialogs which have been created such that they will fit all languages. These may be used as described above and shown in FIG. 6. Use of such special padded dialogs may be particularly beneficial if the resizing is done at run-time, because although they may appear bloated, they guarantee that text will not be truncated. As shown in FIG. 7, these special padded dialogs may be created by, for each control determining the extent required for a string in a language (step 701), where the language may be a source language or a target language. This step is repeated for each language and the greatest extent (e.g. in two dimensions) are stored (step 702). The control size for the language with the greatest extent may also be stored (step 703). If two languages have same extent, the smaller of the two control sizes are stored (in step 703). This process (steps 701-703) is then repeated for each control in the dialog such that, for each control the greatest extent being used and an initial smallest required control size currently being used are stored. This control size may be incorrect if the language has not been resized yet (i.e. it relates to a target language rather than a source language). A padded dialog is then created (step 704), containing generated strings that have an extent of at least the same or greater than the greatest extent found. This padded dialog can then be manually resized (step 705) so that all controls do not contain truncated text and all controls are not overlapped. The resulting dialog may be added as a padded dialog for resizing of dialogs. The strings used (in step 704) may have a format of e.g. "[aaaa]", using delimiters like '[' and ']' so that they can easily be identified in the dialog as being truncated or not. This method enables the creation of a special padded dialog which will fit all languages, by translating all target languages (or potentially all languages required with no source languages) and obtaining the largest extents for each control required by any one language and creating a padded dialog that will fit these largest extents.

Although in the description above, the two stages of resizing controls are used together, either stage could be used independently of the other. For example, the second stage (as described above) could be used on its own to resize controls within dialogs.

The methods described above are performed on a dialog by dialog basis. However, in order to assist with re-use of code in software products, some dialogs are written as multiple dialogs which appear at the same time. For example, in the dialog shown in FIG. 1, the outer border along with the three buttons for 'OK', 'Cancel' and 'Apply' (controls 1 02g-1 02i) may appear in many different dialogs within a software product and therefore may be written as a first dialog (also referred to as a first sub-dialog), whilst the remaining controls 102a-102f, 103, 104a, 104b may comprise a second dialog. Thus although it appears as a single dialog 101, it comprises two dialogs and if these are resized independently, errors may result. Consequently, the methods described above may be performed on groups of dialogs together such that all the controls within the group of dialogs are re-sized using values from the same language. This is particularly beneficial where the group of dialogs are visible to the user at the same time. Where one dialog is used in many situations (e.g. dialog A may be used with dialog B and also used in another situation with dialog C), the group of dialogs (e.g. dialogs A, B and C) may comprise a plurality of subsets (e.g. dialogs A and B, and dialogs A and C) where each subset is displayed at the same time but the entire group is not displayed together.

A software product may include a group of dialogs which are displayed at the same time or independently which are all the same size (or have a fixed size relationship between them) and which should remain the same size as each other (or in the fixed size relationship) when localised. In such a situation, the methods described above may be performed on the group of dialogs such that all the controls (and the dialogs, if necessary) are resized using values from the same source language.

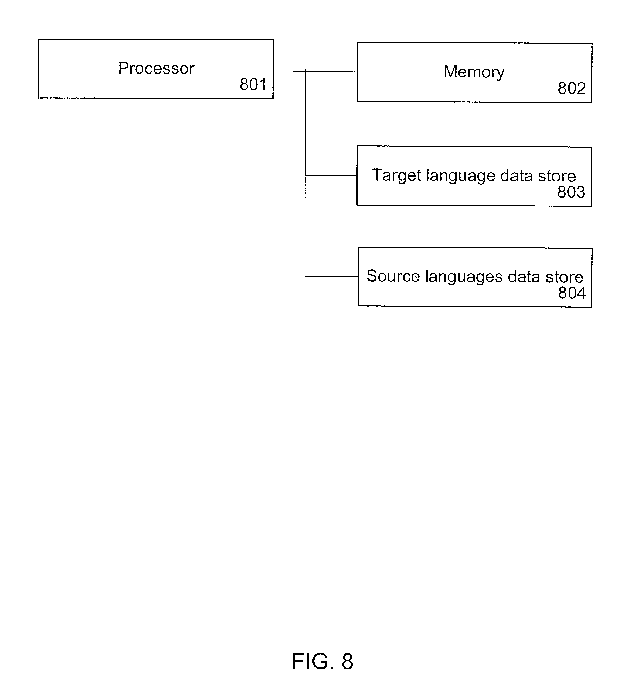

FIG. 8 is a schematic diagram of a system for performing the methods described above. The system 500 comprises a processor 801 and a memory 802. The memory 802 is arranged to store instructions which cause the processor to execute some or all of the method steps described above. The system 500 further comprises a store of data relating to the target language 803 and a store of data relating to the source languages 804. Data relating to the new control positions and sizes and dialog sizes for the target language may be stored, once determined, in the store of data relating to the source language 804 or elsewhere. The data stores 803, 804 may be co-located with the processor 801 and memory 802 or may be located remotely and be accessible, for example, via a network (e.g. an intranet, extranet or the internet).

Although the present examples are described and illustrated herein as being implemented in the system shown in FIG. 8, the system described is provided as an example and not a limitation. As those skilled in the art will appreciate, the present examples are suitable for application in a variety of different types of processing systems.

The methods described above may be used at any stage in the life of the software product and may, for example, be performed at run time or at compile time. If used at compile time, the methods are used to resize the controls within dialogs before the release of the product. If used at run-time, the methods are used before the display is generated on a user's display device. This may be beneficial where the translation of strings occurs at run-time, however, this requires the database of information on source languages to be available at run-time and may be processor intensive. Where the methods described above are used at run-time it may be beneficial to use padded dialogs as part of the comparison process (e.g. as shown in FIG. 6) because there resultant dialog with resized controls may not undergo any manual testing prior to being displayed to a user. The use of padded dialogs assists in reducing the possibility that there will be truncations of text within the dialog.

Although the methods are described above as being used for localisation of software products, these methods may be applied wherever it is necessary to change the strings on controls or to re-size controls within dialogs. For example, the methods may be used where software products are being converted for use on a device with different display dimensions e.g. for use on a PDA or mobile telephone. In such cases, the 'source languages' may comprise other software products which have already been converted for the new display format.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'resize' is used herein to refer to the changing of size of controls within a dialog and in changing the size of a control, the position may also be changed.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

**Claims**

1. A method of generating a resized dialog for a target language, the dialog comprising a plurality of controls and the method comprising:

   accessing a store of data relating to the dialog in a target language, the store of data comprising a translated string in the target language associated with each of the plurality of controls;
   calculating a required display parameter for each of the plurality of controls;
   accessing a store of data relating to the dialog in a plurality of source languages, the store of data comprising, for each of the plurality of source languages, a stored display parameter for each of the plurality of controls;

for each of the plurality of controls, comparing the calculated required display parameter with the corresponding stored display parameters for each of the plurality of source languages to identify any source language where, for all of the plurality of controls, the stored display parameter is not less than the calculated required display parameter; and

where one or more source languages are identified, selecting one of the identified source languages based on first predetermined criteria and generating a resized dialog using stored control positions and sizes for the selected source language.

2.  A method according to claim 1, wherein the required display parameter comprises an extent required for the display of the translated string, the stored display parameter comprises an extent and wherein the store of data relating to the dialog in a plurality of source languages comprises, for each of the plurality of source languages, an extent and a control position and size for each of the plurality of controls.

3.  A method according to claim 1, wherein the required display parameter comprises a control size required in the target language and wherein the stored display parameter comprises a control size.

4.  A method according to claim 2, further comprising, where no source language is identified:

    determining a control size required in the target language for each of the plurality of controls;
    for each of the plurality of controls, comparing the determined control size with the corresponding stored control sizes for each of the plurality of source languages to identify any source language where, for all of the plurality of controls, the stored control size is not less than the determined control size; and

    where one or more source languages are identified, selecting one of the identified source languages based on second predetermined criteria and generating a resized dialog using the stored control positions and sizes for the selected source language.

5.  A method according to claim 4, further comprising, where no source language is identified in the control size comparison:

    determining a difference between the stored control size and the determined control size for each of the plurality of source languages and for each of the plurality of controls;
    selecting one of the source languages based on the determined differences; and
    generating a resized dialog using the stored control positions and sizes for the selected source language.

6.  A method according to claim 4, further comprising, where no source language is identified in the control size comparison:

    accessing a store of data relating to one or more corresponding padded dialogs, the store of data comprising, for each of the one or more corresponding padded dialogs, a control position and size for each of the plurality of controls in the dialog;
    for each of the plurality of controls, comparing the determined control size with the corresponding stored control sizes for each of the one or more corresponding padded dialogs to identify any padded dialog where, for all of the plurality of controls, the stored control size is not less than the determined control size; and

    where one or more corresponding padded dialogs are identified, selecting one of the corresponding padded dialogs based on predetermined criteria and generating a resized dialog using the stored control positions and sizes for the selected corresponding padded dialog.

7.  A method according to claim 6, further comprising, where no corresponding padded dialog is identified:

    determining a difference between the stored control size and the determined control size for each of the plurality of source languages, for each of the corresponding padded dialogs and for each of the plurality of controls;
    selecting one of the source languages or one of the corresponding padded dialogs based on the determined differences; and
    generating a resized dialog using the stored control positions and sizes for the selected source language or corresponding padded dialog.

8. A method according to any of claims 4-7, wherein determining a control size required in the target language for each of the plurality of controls comprises:

for a first of the plurality of controls, comparing the calculated extent required with the corresponding stored extents for each corresponding control in the plurality of source languages to identify any corresponding control where the stored extent is not less than the calculated extent required;

where one or more corresponding controls are identified, selecting the corresponding control from the identified corresponding controls with the smallest stored control size and setting the control size required in the target language for the first of the plurality of controls equal to the stored control size of the selected corresponding control; and repeating the comparing, selecting and setting steps for each of the plurality of controls.

9. A method according to any of claims 4-8, wherein the first predetermined criteria and the second predetermined criteria are the same.

10. A method according to any of the preceding claims, wherein the dialog comprises a plurality of sub-dialogs.

11. A method according to any of claims 2 and 4-10, wherein
the store of data relating to the dialog in a target language comprises one or more translated strings in a target language associated with each of the plurality of controls; and wherein
calculating an extent required for display of the translated string for each of the plurality of controls comprises:

for each of the plurality of controls, calculating an extent for display of each of the one or more translated strings associated with the control and setting the extent required for the control equal to the largest of the calculated extents.

12. A method according to any of the preceding claims, wherein the store of data relating to the dialog in a plurality of source languages further comprises a dialog size for each of the plurality of source languages and wherein generating a resized dialog using the stored control sizes for the selected source language comprises:

generating a resized dialog using the stored control positions and sizes and the stored dialog size for the selected source language.

13. A method according to any of the preceding claims, further comprising:

calculating a confidence factor associated with the generated resized dialog.

14. A method of generating a resized group of dialogs for a target language, each dialog comprising a plurality of controls, and the method comprising:

for each dialog in the group of dialogs, generating a resized dialog according to any of claims 1-5, wherein the first predetermined criteria ensure that the same source language is selected for each dialog in the group of dialogs.

15. A computer program comprising computer program code means adapted to perform all the steps of any of the preceding claims when said program is run on a computer.

16. A computer program as claimed in claim 1 5 embodied on a computer readable medium.

17. A system for generating a resized dialog for a target language, the dialog comprising a plurality of controls and the system comprising:

a processor (801); and
a memory (802) arranged to cause the processor to:

access a store of data relating to the dialog in a target language (803), the store of data comprising a translated string in the target language associated with each of the plurality of controls;
calculate a required display parameter for each of the plurality of controls;

access a store of data relating to the dialog in a plurality of source languages (804), the store of data comprising, for each of the plurality of source languages, a stored display parameter for each of the plurality of controls;

for each of the plurality of controls, compare the calculated required display parameter with the corresponding stored display parameters for each of the plurality of source languages to identify any source language where, for all of the plurality of controls, the stored display parameter is not less than the calculated required display parameter; and

where one or more source languages are identified, select one of the identified source languages based on first predetermined criteria and generate a resized dialog using stored control positions and sizes for the selected source language

18. A system according to claim 17, wherein the required display parameter comprises an extent required for the display of the translated string, the stored display parameter comprises an extent and wherein the store of data relating to the dialog in a plurality of source languages comprises, for each of the plurality of source languages, an extent and a control position and size for each of the plurality of controls.

19. A system according to claim 17, wherein the required display parameter comprises a control size required in the target language and wherein the stored display parameter comprises a control size.

20. A system according to claim 18, wherein the memory is further arranged to cause the processor to, where no source language is identified:

determine a control size required in the target language for each of the plurality of controls;

for each of the plurality of controls, compare the determined control size with the corresponding stored control sizes for each of the plurality of source languages to identify any source language where, for all of the plurality of controls, the stored control size is not less than the determined control size; and

where one or more source languages are identified, select one of the identified source languages based on second predetermined criteria and generate a resized dialog using the stored control positions and sizes for the selected source language.

103 — Internet Options

101

104a —

Home page
105a
You can change which page to use for your home page.

Address: http://intranet
105b

| Use Current | Use Default | Use Blank |
| 102a | 102b | 102c |

104b —

Temporary Internet files

Pages you can view on the Internet are stored in a special folder for quick viewing later. 105c

| Delete Cookies... | Delete Files... | Settings... |
| 102d | 102e | 102f |

| OK | Cancel | Apply |
| 102g | 102h | 102i |

FIG. 1

Determine extent required by translated string   201

Compare against stored values for other languages   202

Suitable language found?   203

NO

YES

To FIG. 3

Select most suitable language   204

Use control positions and sizes from selected language   205

FIG. 2

```
┌─────────────┐
│  FROM       │
│  FIG. 2     │
└─────────────┘
```

┌──────────────────────────────────────┐
│ Determine required control sizes in new │
│           language                  301 │
└──────────────────────────────────────┘

┌──────────────────────────────────────┐
│ Compare against stored values for other │
│           languages                 302 │
└──────────────────────────────────────┘

Suitable language found?
303

NO

YES

┌──────────────────────────────────────┐      ┌──────────────────────────┐
│ Select most suitable language        │      │ Select closest non-      │
│                              304      │      │ suitable language    305 │
└──────────────────────────────────────┘      └──────────────────────────┘

┌──────────────────────────────────────┐
│ Use control positions and sizes from │
│        selected language          306 │
└──────────────────────────────────────┘

FIG. 3

Check extent of corresponding control in a source language    401

Extent not less than required extent?    402    —NO

YES

Store size of control    403

All source languages checked?    404    —NO

YES

Keep smallest of stored sizes, discard other stored sizes    405

FIG. 4

```
                    │
                    ▼
┌─────────────────────────────────────┐
│ Compare against stored width value for a│
│      source language        202a     │
└─────────────────────────────────────┘
                    │
                    ▼
         ╱╲                              NO
        ╱  ╲ Is stored width less than   ──────┐
        ╲  ╱  required width?                  │
         ╲╱    202b                            │
          │                                    │
         YES                                   │
          ▼                                    │
┌─────────────────────────────────────┐       │
│ Introduce line breaks to translated string │ │
│ and re-calculate required width such that   │ │
│ required extent width not greater than      │ │
│      stored width          202c    │       │
└─────────────────────────────────────┘       │
          │                                    │
          ▼                                    │
┌─────────────────────────────────────┐       │
│                                     │       │
│  Re-calculate required extent height │       │
│                          202d      │       │
└─────────────────────────────────────┘       │
          │◄──────────────────────────────────┘
          ▼
┌─────────────────────────────────────┐
│  Compare required extent height against │
│  stored height for the source language  │
│                          202e      │
└─────────────────────────────────────┘
          │
          ▼
```

FIG. 5

19

FROM
FIG. 2

Determine required control sizes in new
language                                    301

Compare against stored values for other
languages                                  302

Suitable language found?
303

NO

Compare against stored values for
padded dialogs                  601

YES

Suitable dialog found?
602

NO

YES

Select most suitable
language        304

Select most suitable
dialog          603

Select closest non-
suitable language 604

Use control positions and sizes from
selected language / dialog        605

FIG. 6

Determine extent required by string in a
control in a language      701

Store greatest extent for all languages
702

Store control size for language with
greatest extent      703

Create padded dialog
704

Manually resize padded dialog
705

FIG. 7

| Processor | | Memory |
|---|---|---|
| 801 | | 802 |

| Target language data store |
|---|
| 803 |

| Source languages data store |
|---|
| 804 |

FIG. 8

**European Patent Office**

**EUROPEAN SEARCH REPORT**

Application Number

EP 06 27 0050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 671 378 A (ACKER WARREN PATRICK [US] ET AL) 23 September 1997 (1997-09-23) * column 6, line 17 - column 12, line 17 * ----- | 1-20 | INV. G06F9/44 |
| Y | WO 00/45249 A (GATEWAY [US]) 3 August 2000 (2000-08-03) * page 2, line 2 - line 31 * * page 5, line 29 - page 11, line 21 * ----- | 1-20 | |
| A | "SIZING OF TEXTUAL ELEMENTS FOR NATIONAL LANGUAGE SUPPORT" IBM TECHNICAL DISCLOSURE BULLETIN, IBM CORP. NEW YORK, US, vol. 37, no. 8, 1 August 1994 (1994-08-01), page 169, XP000456375 ISSN: 0018-8689 * the whole document * ----- | 1,6,7, 14,15,17 | |
| A | US 6 559 861 B1 (KENNELLY RICHARD J [US] ET AL) 6 May 2003 (2003-05-06) * column 2, line 62 - column 11, line 19 * ----- | 1-5,8-20 | TECHNICAL FIELDS SEARCHED (IPC) G06F |
| A | EP 1 071 013 A (IBM [US]) 24 January 2001 (2001-01-24) * paragraph [0017] - paragraph [0039] * ----- | 1-5,8-20 | |
| A | EP 0 955 580 A (ADOBE SYSTEMS INC [US]) 10 November 1999 (1999-11-10) * paragraph [0004] - paragraph [0014] * * paragraph [0030] - paragraph [0071] * ----- | 1-5,8-20 | |

The present search report has been drawn up for all claims

| Place of search | Date of completion of the search | Examiner |
|---|---|---|
| Munich | 8 May 2007 | Kusnierczak, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 27 0050

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2007

| Patent document cited in search report | | Publication date | Patent family member(s) | | Publication date |
|---|---|---|---|---|---|
| US 5671378 | A | 23-09-1997 | NONE | | |
| WO 0045249 | A | 03-08-2000 | AU | 2859400 A | 18-08-2000 |
| | | | US | 7111242 B1 | 19-09-2006 |
| US 6559861 | B1 | 06-05-2003 | NONE | | |
| EP 1071013 | A | 24-01-2001 | CA | 2307299 A1 | 29-12-2000 |
| | | | US | 6507812 B1 | 14-01-2003 |
| EP 0955580 | A | 10-11-1999 | JP | 2000076051 A | 14-03-2000 |
| | | | US | 6785866 B1 | 31-08-2004 |

For more details about this annex : see Official Journal of the European Patent Office, No. 12/82